# EUROPÄISCHE PATENTSCHRIFT

(11) **EP 2 965 947 B1**
(45) Veröffentlichungstag und Bekanntmachung des Hinweises auf die Patenterteilung: **25.12.2019**
(21) Anmeldenummer: 14176666.7
(22) Anmeldetag: 11.07.2014
(51) Int. Cl.: B60Q 1/26, B60R 1/12, B60R 1/06, G02B 6/00, F21S 43/237, F21S 43/239, F21S 43/243, F21S 43/245

(54) **Fahrtrichtungsanzeigemodul und Außenrückspiegelanordnung**
Driving direction indicator module and outside rear view mirror assembly
Module de clignotant et système de rétroviseur extérieur

(43) Veröffentlichungstag der Anmeldung: 13.01.2016
(73) Patentinhaber: SMR Patents S.à.r.l., 2453 Luxembourg (LU)
(72) Erfinder: Fritz, Daniel, 70374 Stuttgart (DE); Erhart, Volker, 73257 Köngen (DE)
(74) Vertreter: Weber-Bruls, Dorothée

(56) Entgegenhaltungen:
- EP-A1- 1 854 667
- EP-A1- 2 261 083
- EP-A2- 1 391 755
- EP-A2- 2 489 550
- DE-A1-102008 045 698
- KR-B1- 100 865 008

## Beschreibung

Die vorliegende Erfindung betrifft ein Fahrtrichtungsanzeigemodul für eine Außenrückblickspiegelanordnung für ein Kraftfahrzeug, in Form eines Blinkermoduls, nach dem Oberbegriff von Anspruch 1 und eine Außenrückblickspiegelanordnung mit solch einem Fahrtrichtungsanzeigemodul.

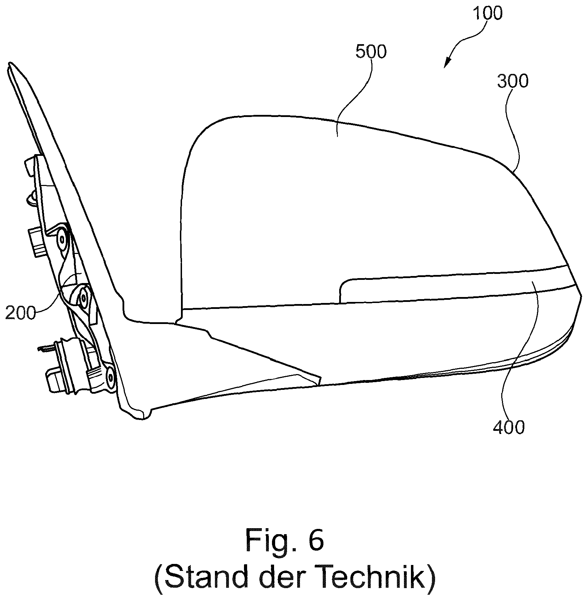

Außenrückblickspiegelanordnungen für Kraftfahrzeuge sind in Stand der Technik vielfältig bekannt. Figur 6 zeigt beispielhaft solch eine Außenrückblickspiegelanordnungen 100, die einen gegenüber einem Spiegelfuß 200 verschwenkbaren Spiegelkopf 300 aufweist. Der Spiegelkopf 300 weist ein Gehäuse 400 auf, das zumindest einen Spiegel (nicht gezeigt) und ein Fahrtrichtungsanzeigemodul 400 trägt.

Aus der EP 0 858 932 B2 ist es für solch eine Außenrückblickspiegelanordnung bekannt, mindestens eine Lichtquelle wenigstens einer Lichtaustrittsöffnung im Gehäuse zuzuordnen und die Lichtaustrittsöffnung mit einem Lichtleiter auszufüllen, der innerhalb des Gehäuses mit der Lichtquelle verbunden ist. Der Lichtleiter kann dabei aus glasklarem Kunststoff besteht und mit seiner Außenseite innerhalb der Außenkontur des Gehäuses liegen.

Es hat sich herausgestellt, dass die Herstellung der Lichtfenster, die als Lichtleiter dienen, wie in der EP 0 858 932 B2 beschrieben, nicht einfach ist. Die Lichtfenster dienen nämlich als Lichtleiter dem Transport von Licht von einer Einkoppelstelle zu einer Vielzahl von im Lichtleiter bereitgestellten Auskoppelstellen, so dass die Leuchtdichte in einem End-Auskoppelbereich bzw. Abstrahlbereich nicht mehr gesetzlichen Bestimmungen genüge leisten kann.

Die Herstellung von Auskoppelstellen ist alternativerweise durch den Einsatz von optischen Folien gelöst worden, siehe die DE 10 2011 103 200 A1.

Bei den gesetzlichen Bestimmungen handelt es sich vor allem um die Regelung Nr. 6 der Wirtschaftskommission der Vereinten Nationen für Europa die ECE R6, d. h., zu einheitlichen Bedingungen für die Genehmigung von Fahrtrichtungsanzeigern für Kraftfahrzeuge und ihre Anhänger.

Ein gattungsgemäßes Fahrtrichtungsanzeigemodul ist aus der EP 1 854 667 A1 bekannt. Dabei kommt eine Leuchteneinheit mit wenigstens zwei Lichtleiterabschnitte zum Einsatz, die an einem Knotenpunkt zusammengeführt sind, der einen Auskoppelbereich bildet, in dem Licht austritt, das in den beiden Lichtleiterabschnitten zum Knotenpunkt geführt ist.

Ein weiteres gattungsgemäßes Fahrtrichtungsanzeigemodul ist in der EP 1 391 755 A2 beschrieben. Ein erster Lichtleiter erstreckt sich von der Außenkante des Gehäuses eines Außenrückspiegels im wesentlichen horizontal zum Kraftfahrzeug und leitet von zumindest einer ersten Lichtquelle an einer zum Fahrzeug hinweisenden Stirnseite eingekoppeltes Licht zu seiner gegenüberliegenden Stirnseite, um es dort gemäß der gesetzlich geforderten Lichtverteilung im wesentlichen entgegen und quer zur Fahrtrichtung auszukoppeln. Ein zweiter Lichtleiter ist im Wesentlichen hinter dem ersten Lichtleiter angeordnet und koppelt das in ihn von zumindest einen zweiten Lichtquelle an einer zum Fahrzeug hinweisenden Stirnseite eingekoppelte Licht mittels Auskoppelelementen im Wesentlichen quer zu seiner Längserstreckung aus. Das aus dem zweiten Lichtleiter ausgekoppelte Licht durchstrahlt den davon getrennt ausgeformten ersten Lichtleiter.

Die EP 2 489 550 A2 offenbart auch ein gattungsgemäßes Fahrtrichtungsanzeigemodul, und zwar mit einem unitären Lichtführungsglied, das zwei Lichtleiter aufweist, wobei Licht, das von mindestens einer Lichtquelle in das Lichtführungsglied eingekoppelt wird, von einem ersten Lichtleiter mit ersten nach innen reflektierenden Stufen und einen zweiten Lichtleiter mit zweiten nach innen reflektierende Stufen ausgegeben wird. Der erste und zweite Lichtleiter sind so konfiguriert und angeordnet, dass der erste Lichtleiter nicht mit vom zweiten Lichtleiter ausgesandten Licht interferiert und auch der zweite Lichtleiter nicht mit vom ersten Lichtleiter ausgesandten Licht interferiert.

Ferner ist aus der EP 2 261 083 A1 ein Türspiegel bekannt, der Folgendes umfasst: einen ersten Licht emittierenden Lichtleiter, der in dem Visierteil eines Türspiegels angeordnet ist, der faltbar an dem Türspiegelhalteteil eines Fahrzeugs montiert ist; einen zweiten Licht emittierenden Lichtleiter, der in dem Türspiegel-Trägerteil vorgesehen ist, wobei ein Ende des zweiten Licht emittierenden Lichtleiters einem Ende des ersten Licht emittierenden Lichtleiters zugewandt ist, um eine Kontinuität mit dem ersten Licht emittierenden Lichtleiter zu haben; und eine Lichtquelle, die konfiguriert ist, um Licht in Richtung des ersten Licht emittierenden Lichtleiters und des zweiten Licht emittierenden Lichtleiters zu emittieren, wobei die Lichtquelle in dem Visierteil vorgesehen ist.

Aufgabe der vorliegenden Erfindung ist es, das gattungsgemäße Fahrtrichtungsanzeigemodul derart weiterzuentwickeln, dass es einfach herstellbar ist, und zwar unter Erfüllung sowohl ästhetischer als auch sicherheitstechnischer Anforderungen.

Diese Aufgabe wird erfindungsgemäß gelöst durch die Merkmale des Kennzeichens von Anspruch 1.

Die Ansprüche 2 und 3 beschreiben bevorzugte Ausführungsformen des Fahrtrichtungsanzeigemoduls der Erfindung. Mit der Erfindung wird auch eine Außenrückblickspiegelanordnung für ein Kraftfahrzeug mit einem gegenüber einem Spiegelfuß verschwenkbaren Spiegelkopf geliefert, wobei in dem Gehäuse des Spiegelkopfs zumindest ein Spiegel und ein erfindungsgemäßes Fahrtrichtungsanzeigemodul bereitgestellt sind.

Dabei kann vorgesehen sein, dass das Gehäuse des Spiegelkopfs eine Lichtaustrittsöffnung aufweist, die zumindest durch den ersten Lichtleiter ausgefüllt ist.

Erfindungsgemäß bevorzugt ist, dass das Fahrtrichtungsanzeigemodul mit dem Gehäuse des Spiegelkopfes, insbesondere über das Gehäuse-Modul und/oder mittels einer Schnappverbindung, lösbar verbunden ist.

Der Erfindung liegt somit die überraschende Erkenntnis zugrunde, dass die beiden Lichtleiter-Funktionen eines Fahrtrichtungsanzeigemoduls, nämlich zum Einen zur Erfüllung von Design-Wünschen und zum Anderen zur Erfüllung einer gesetzlich bestimmten Ausleuchtung, durch zwei Lichtleiter bereitgestellt werden kann, die vorzugsweise jedoch in einem ausgeformt sind. Ein erster Lichtleiter stellt dabei einen Design-Lichtleiter mit integrierten, designbedingten Optiken beziehungsweise Auskoppelstellen dar, während ein zweiter Lichtleiter einen Funktionslichtleiter ohne designbedingte Optiken beziehungsweise Auskoppelstellen darstellt. Bevorzugt sind die beiden Lichtleiter auch kombiniert mit einer Lichtscheibe ausgeführt. Auch kann die Einheit aus den beiden Lichtleitern als ein EinKomponenten-Spritzgußteil ausgeformt sein, vorzugsweise zusammen mit einem Gehäuse, über das das Fahrtrichtungsanzeigemodul mit einer Außenrückblickspiegelanordnung verbindbar ist.

Weitere Merkmale und Vorteile der Erfindung ergeben sich aus der nachfolgenden Beschreibung eines Ausführungsbeispiels unter Bezugnahme auf die nachfolgenden Zeichnungen:
- **Fig. 1**: zeigt eine schematische Ansicht eines erfindungsgemäßen Fahrtrichtungsanzeigemoduls;
- **Fig. 2a und 2b**: zeigt das Fahrtrichtungsanzeigemodul von Figur 1 sowie eine Schnittansicht desselben längs einer Ebene A;
- **Fig. 3a und 3b**: zeigt das Fahrtrichtungsanzeigemodul von Figur 1 sowie eine Schnittansicht desselben längs einer Ebene B;
- **Fig. 4a und 4b**: zeigt das Fahrtrichtungsanzeigemodul von Figur 1 sowie eine Schnittansicht desselben längs einer Ebene C;
- **Fig. 5**: zeigt eine schematische Ansicht zweier Lichtleiter und einer Lichtquelle des Fahrtrichtungsanzeigemoduls von Figur 1; und
- **Fig. 6**: zeigt eine schematische Ansicht einer bekannten Außenrückblickspiegelanordnung für ein Kraftfahrzeug mit einem Fahrtrichtungsanzeigemodul.

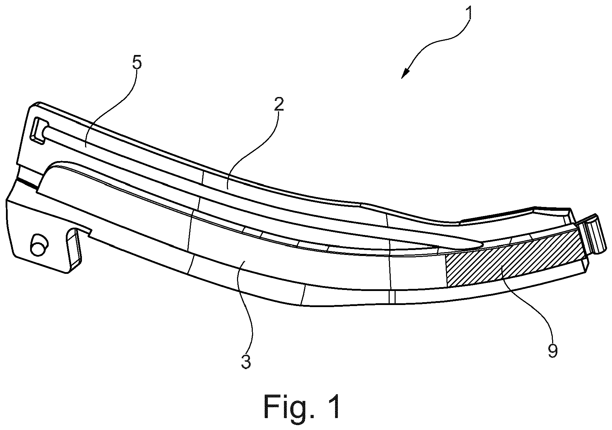

Figur 1 zeigt ein erfindungsgemäßes Fahrtrichtungsanzeigemodul, das häufig auch einfach als Blinkermodul 1 bezeichnet wird. Dieses Blinkermodul 1 umfasst nicht nur ein Gehäuseteil 2 und einen ersten Lichtleiter 3, sondern auch einen zweiten Lichtleiter 5. Der erste Lichtleiter 3 stellt einen Designlichtleiter mit einer Vielzahl von Auskoppelstellen beispielsweise in Form einer Profilierung im Sinne der EP 0 858 932 B2 dar. Licht einer in der Figur 1 nicht gezeigten Lichtquelle, die zumindest eine LED umfasst, gelang an einem in der Figur 1 links gezeigten, ersten Ende in den ersten Lichtleiter 3 und verliert auf seinem Weg zu dem dem ersten Ende gegenüberliegenden zweiten Ende, das in der Figur 1 rechts dargestellt ist, über die Auskoppelstellen an Leuchtdichte, so dass in einem Abstrahlbereich 9 am zweiten Ende des ersten Lichtleiters 3 eine gesetzlich ausreichende Lichtdichte erst durch den zweiten Lichtleiter 5 gewährleistbar ist. Der zweite Lichtleiter 5 wird daher auch als Funktionslichtleiter bezeichnet, wobei er mit Licht aus der Lichtquelle an seinem ersten, links in der Figur 1 dargestellten Ende beaufschlagbar ist, das er im wesentlichen ohne Verluste in den Abstrahlbereich 9 abgibt, so dass der Abstrahlbereich 9 auch tatsächlich der ECE R6 Genüge leistet.

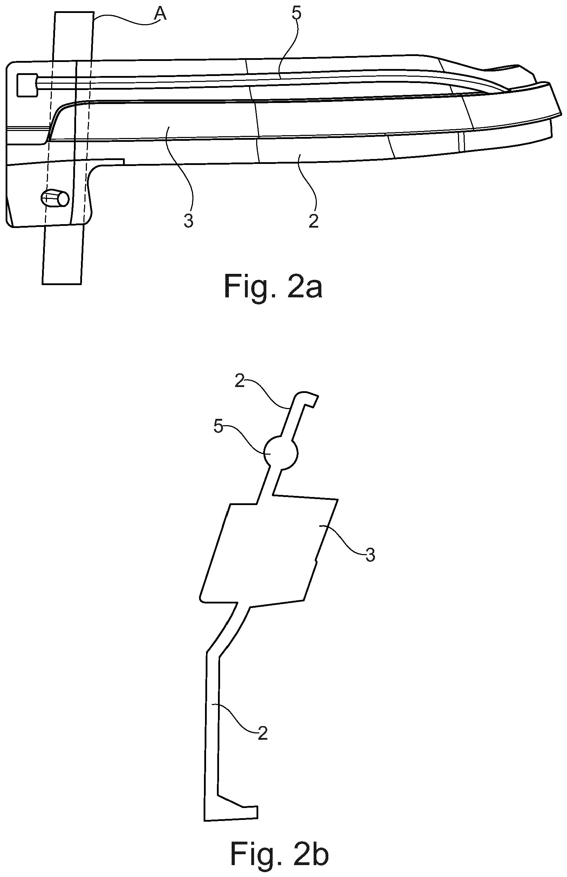

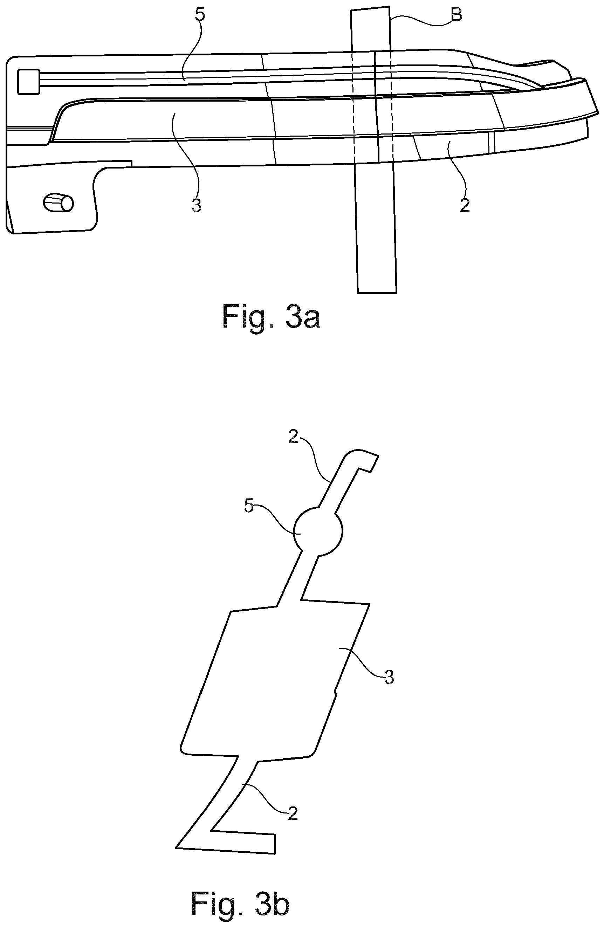

Figuren 2a, 3a und 4a stellen Ansichten gemäß Figur 1 dar, in denen zusätzlich jeweils eine Schnittebene dargestellt ist, und die entsprechenden Schnittansichten finden sich in Figur 2b, 3b beziehungsweise 4b. Anhand dieser Figuren lässt sich der Relativverlauf der beiden Lichtleiter 2, 3 erkennen. Genauer gesagt laufen die beiden Lichtleiter 3, 5 von ihrem jeweiligen ersten Ende 3' beziehungsweise 5' über einen Großteil des Blinkermoduls 1 parallel und lediglich am zweiten Ende 5" des zweiten Lichtleiters 5 nähert sich dieser dem zweiten Ende 3" des ersten Lichtleiters 3, um über einen Spalt 7 Lichtstrahlen 11 in den Abstrahlbereich 9 einzubringen.
Den Figuren 2a, 3a und 4b ist desweiteren die Geometrie des Gehäuseteils 2 entnehmbar, das zusammen mit den beiden Lichtleitern 3 und 5 als ein Spritzgußteil ausgeformt ist.

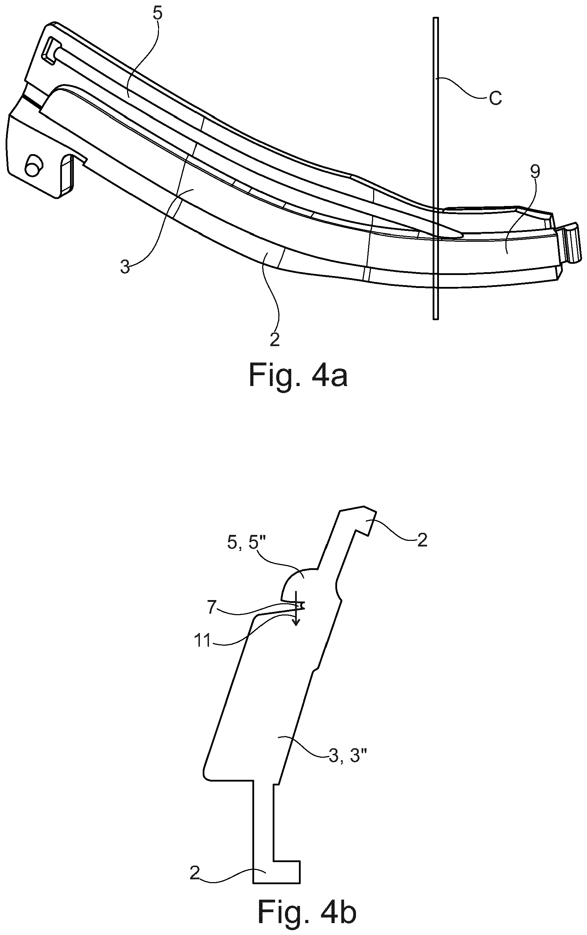

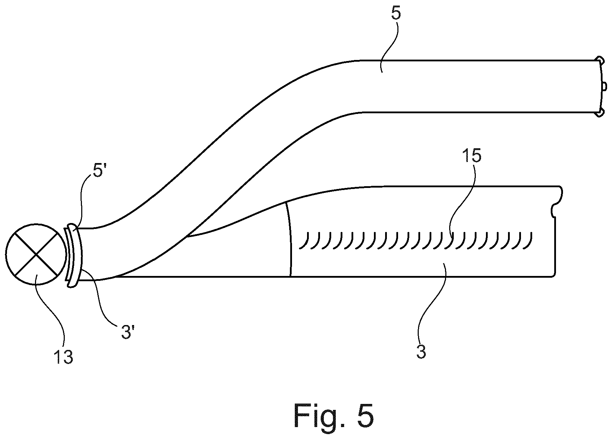

In Figur 5 ist schematisch angedeutet, wie über eine Lichtquelle 13 Licht in das erste Ende 3' des ersten Lichtleiters 3 und in das erste Ende 5' des zweiten Lichtleiters 5 eingekoppelt wird. Dabei sind im ersten Lichtleiter 3 auch Lichtauskoppelstellen 15 angedeutet. Nicht sichtbar in Figur 5 sind die jeweiligen zweiten Enden der beiden Lichtleiter 3, 5, wobei diesbezüglich insbesondere auf die Figuren 4a und 4b verwiesen wird.

Das erfindungsgemäße Blinkermodul 1 kann in üblicher Weise, wie beispielsweise in der EP 0 858 932 B2 beschrieben, in einer Außenrückblickspiegelanordnung (nicht gezeigt) eingebracht werden. Es zeichnet sich durch seine vielfältigen Designmöglichkeiten über den ersten Lichtleiter 3 ohne Einbußen an Leuchtdichte im Abstrahlbereich 9 aufgrund des zweiten Lichtleiters 5, der gemeinsam mit dem ersten Lichtleiter 3 ausgeformt ist, aus.

### Bezugszeichenliste

- 1: Blinkermodul
- 2: Gehäuseteil
- 3: Lichtleiter
- 3': erstes Ende
- 3": zweites Ende
- 5: Lichtleiter
- 5': erstes Ende
- 5": zweites Ende
- 7: Spalt
- 9: Abstrahlbereich nach ECE R6
- 11: Lichtstrahl
- 13: Lichtquelle
- 15: Aussenkoppelstelle
- 100: Aussenrückblickspiegelanordnung
- 200: Spiegelfuß
- 300: Spiegelkopf
- 400: Blinkermodul
- 500: Gehäuse

- A, B, C: Schnittebene

## Patentansprüche

1. Fahrtrichtungsanzeigemodul (1) für eine Außenrückblickspiegelanordnung für ein Kraftfahrzeug, in Form eines Blinkermoduls, mit einer Lichtquelle (13), einem ersten eine Vielzahl von Lichtauskoppelstellen (15) umfassenden Lichtleiter (3) und einem zweiten Lichtleiter (5), wobei ein Abstrahlbereich (9) in einem Bereich des dem ersten Ende (3') des ersten Lichtleiters (3) gegenüber liegenden zweiten Endes (3") des ersten Lichtleiters (3) angeordnet ist, **dadurch gekennzeichnet, dass** die eine Lichtquelle (13) einen ersten Strahlungsteil an einem ersten Ende (3') in den ersten Lichtleiter (3) und einen zweiten Strahlungsteil an einem ersten Ende (5') in den zweiten Lichtleiter (5) einkoppelt, wobei der zweite Lichtleiter (5) zumindest teilweise parallel zum ersten Lichtleiter (3) verläuft, und sein zweites Ende (5") in einem einzigen Lichtauskoppelbereich des zweiten Lichtleiters (5) endet, wobei sich der zweite Lichtleiter (5) an seinem zweiten Ende (5") dem zweiten Ende (3") des ersten Lichtleiters (3) lediglich nähert, um über einen Spalt (7) Lichtstrahlen (11) in den Abstrahlbereich (9) einzubringen, wobei die beiden Lichtleiter (3, 5) von ihrem jeweiligen ersten Ende (3', 5') über ein Großteil des Fahrtrichtungsanzeigemoduls (1) parallel verlaufen.

2. Fahrtrichtungsanzeigemodul nach Anspruch 1, **dadurch gekennzeichnet, dass** die Lichtauskoppelstellen (15) über die gesamte Länge des ersten Lichtleiters (3) zwischen dessen ersten und zweiten Ende (3', 3"), insbesondere gleichmäßig, verteilt und/oder über Optikelemente bereitgestellt sind.

3. Fahrtrichtungsanzeigemodul nach Anspruch 1 oder 2, **dadurch gekennzeichnet, dass** der erste Lichtleiter (3) gemeinsam mit dem zweiten Lichtleiter (5), einem Modul-Gehäuse (2) und/oder den Optikelementen (15) ausgeformt ist, vorzugsweise als ein 1K-Spritzgußteil.

4. Außenrückblickspiegelanordnung für ein Kraftfahrzeug mit einem gegenüber einem Spiegelfuß verschwenkbaren Spiegelkopf, wobei in dem Gehäuse des Spiegelkopfs zumindest ein Spiegel und ein Fahrtrichtungsanzeigemodul (1) nach einem der vorangehenden Ansprüche bereitgestellt sind.

5. Außenrückblickspiegelanordnung nach Anspruch 4, **dadurch gekennzeichnet, dass** das Gehäuse des Spiegelkopfs eine Lichtaustrittsöffnung aufweist, die zumindest durch den ersten Lichtleiter ausgefüllt ist.

6. Außenrückblickspiegelanordnung nach Anspruch 5 oder 6, **dadurch gekennzeichnet, dass**
das Fahrtrichtungsanzeigemodul (1) mit dem Gehäuse des Spiegelkopfes, insbesondere über das Modul-Gehäuse (2) und/oder mittels einer Schnappverbindung, lösbar verbunden ist.

## Claims

1. A driving direction indicator module (1) for an outside rear view mirror assembly for a motor vehicle, in the form of a indicator light module, having a light source (13), a first light guide (3) comprising a plurality of light coupling-out points (15) and a second light guide (5),
wherein a radiation region (9) is disposed in a region of the second end (3") of the first light guide (3) which is arranged opposite the first end (3') of the first light guide (3), **characterized in that** the one light source (13) couples in a first radiation part at a first end (3') into the first light guide (3) and a second radiation part at a first end (5') into the second light guide (5),
wherein the second light guide (5) runs at least partially parallel to the first light guide (3), and its second end (5") terminates in a single light coupling-out region of the second light guide (5),
wherein the second light guide (5) approaches the second end (3") of the first light guide (3) at its second end (5") only in order to introduce light rays (11) into the radiation region (9) via a gap (7),
wherein the two light guides (3, 5) run in parallel from their respective first ends (3', 5') over a majority of the driving direction indicator module (1).

2. The driving direction indicator module according to Claim 1, **characterized in that** the light coupling-out points (15) are distributed, in particular uniformly, over the entire length of the first light guide (3) between its first and second ends (3', 3") and/or are provided via optic elements.

3. The driving direction indicator module according to Claim 1 or 2, **characterized in that** the first light guide (3) is formed together with the second light guide (5), a module casing (2) and/or the optic elements (15), preferably as a 1K injection-moulded part.

4. An outside rear view mirror assembly for a motor vehicle with a mirror head which is pivotable relative to a mirror base,
wherein, in the casing of the mirror head, at least one mirror and a driving direction indicator module (1) according to any one of the preceding claims are provided.

5. The outside rear view mirror assembly according to Claim 4, **characterized in that** the casing of the mirror head has a light exit opening, which is filled at least by the first light guide.

6. The outside rear view mirror assembly according to Claim 5 or 6, **characterized in that** the driving direction indicator module (1) is releasably connected to the casing of the mirror head, in particular via the module casing (2) and/or by means of a snap connection.

## Revendications

1. Module indicateur de direction (1) pour un dispositif de rétroviseur extérieur d'un véhicule automobile, sous la forme d'un module de clignotant, avec une source de lumière (13), un premier conduit de lumière (3) comprenant une pluralité de points de découplage de lumière (15) et un deuxième conduit de lumière (5), une région de rayonnement (9) étant disposée dans une région de la deuxième extrémité (3") du premier conduit de lumière (3) opposée à la première extrémité (3') du premier conduit de lumière (3), **caractérisé en ce que**
la une source de lumière (13) injecte une première partie de rayonnement à une première extrémité (3') dans le premier conduit de lumière (3) et une deuxième partie de rayonnement à une première extrémité (5') dans le deuxième conduit de lumière (5), le deuxième conduit de lumière (5) se déroulent au moins en partie parallèlement au premier conduit de lumière (3), et sa deuxième extrémité (5") se terminant dans une région de sortie de lumière unique du deuxième conduit de lumière (5), le deuxième conduit de lumière (5) ne se rapprochant à sa deuxième extrémité (5") de la deuxième extrémité (3") du premier conduit de lumière (3) que pour injecter des faisceaux lumineux (11) dans la région de rayonnement (9) au travers d'une fente (7), les deux guides d'ondes lumineuses (3, 5) se déroulent en parallèle pendant une grande partie du module indicateur de directions (1) depuis leur première extrémité (3', 5') respective.

2. Module indicateur de direction selon la revendication 1, **caractérisé en ce que** les points de sortie de lumière (15) sont répartis en particulier régulièrement sur toute la longueur du premier conduit de lumière (3) entre la première et la deuxième extrémité (3', 3") de celui-ci, et/ou réalisés par des éléments optiques.

3. Module indicateur de direction selon la revendication 1 ou 2, **caractérisé en ce que** le premier conduit de lumière (3) est formé d'un seul tenant avec le deuxième conduit de lumière (5), un boîtier (2) de module et/ou les éléments optiques (15), préférentiellement en tant que pièce moulée par injection 1K.

4. Dispositif de rétroviseur extérieur d'un véhicule automobile avec une tête de rétroviseur pivotante par rapport à un pied de rétroviseur, au moins un miroir et un module indicateur de direction (1) selon l'une des revendications précédentes étant présentés dans le boîtier de la tête de rétroviseur.

5. Dispositif de rétroviseur extérieur selon la revendication 4, **caractérisé en ce que** le boîtier de la tête de rétroviseur présente une ouverture de sortie de lumière, complétée au moins par le premier conduit de lumière.

6. Dispositif de rétroviseur extérieur selon la revendication 5 ou la revendication 6, **caractérisé en ce que** le
module indicateur de direction (1) est raccordé de manière amovible au boîtier de la tête de rétroviseur, en particulier par le boîtier (2) de module et/ou au moyen d'une liaison par encliquetage.
